Europäisches Patentamt

European Patent Office

Office européen des brevets

(11) Publication number: 0 590 750 A1

# EUROPEAN PATENT APPLICATION

(21) Application number: 93300060.6

(22) Date of filing: 06.01.93

(51) Int. Cl.⁵: **B65G 27/08**, B65G 27/18, B07B 1/36, B07B 1/42

(30) Priority: 29.09.92 JP 300264/92

(43) Date of publication of application:
06.04.94 Bulletin 94/14

(84) Designated Contracting States:
CH DE FR GB IT LI SE

(71) Applicant: MATSUURA MANUFACTURING CO., LTD.
Azanuma 1,
Urushihara-town 1
Fukui-City, Fukui-prefecture(JP)
Applicant: I.M.N Co., Ltd.
1-1, Imashuku-town 10-chome
Takefu-city, Fukui-prefecture(JP)

(72) Inventor: Horikawa, Yoshiharu
Azanuma 1,
Urushihara-town
Fukui-city, Fukui-prefecture(JP)
Inventor: Yamada, Kikuta
1-1 Imashuku-town 10 chome
Takefu-city, Fukui-prefecture(JP)
Inventor: Yamagata, Yoshiyuki
1-1 Imashuku-town 10-chome
Takefu-city, Fukui-prefecture(JP)

(74) Representative: Brunner, Michael John
GILL JENNINGS & EVERY
Broadgate House
7 Eldon Street
London EC2M 7LH (GB)

(54) Rocking or vibrating conveyor.

(57) (1) A conveyer including a rocking plate (1) having an object (2) of transport placed thereon, and an elastic spring (5) engaged with the plate (1), or an eccentric cam (3) connected to the plate (1). By properly arranging the elastic spring (5), or by properly designing a profile of the eccentric cam (3), the velocity of movement of the plate (1) is set such that the object (2) of transport leaves the plate (1) temporarily in the forward obliquely upward direction when the plate (1) moves forward obliquely upward, or the downward velocity component of the plate (1) temporarily becomes greater than the falling velocity of the object (2) when the plate (1) moves forward obliquely downward, thereby allowing the object (2) to move forwardly on the plate (1) step by step for each rocking motion.

FIG.5(a)

The present invention relates to a conveyer that moves an object of transport on a plate while rocking or vibrating it.

It has heretofore been known to use a conveyer for moving an object. However, it is difficult for the conventional belt conveyers to satisfy the demand for an object of transport to be moved while vibrating or rocking so as to shake an accompanying liquid or solid from the object.

In other words, it is necessary in order to rock or vibrate a moving belt to rock or vibrate pulleys engaged with the belt and a driving source therefor, or to control the relationship between the belt and the associated members even if these members are left stationary, and an arrangement that meets such requirements would be extremely complicated in terms of technology.

It is an object of the present invention to provide a conveyer which is capable of moving an object of transport on a plate while rocking or vibrating both the object and the plate on the basis of an arrangement which is totally different from the conventional belt conveyers.

To attain the above-described object, the present invention provides the following arrangements:

(1) A rocking conveyer including a plate for placing an object of transport thereon, a device for rocking the plate back and forth circularly within a vertical plane, and an elastic spring engaged with the plate to accelerate the velocity of movement of the plate when moving forward obliquely upward in rocking motion caused by the rocking device, to such an extent that the object is caused to leave the plate temporarily in a forward obliquely upward direction by inertia force induced by the acceleration.

(2) A rocking conveyer including a plate for placing an object of transport thereon, a device for rocking the plate back and forth circularly within a vertical plane, and an elastic spring engaged with the plate to accelerate the velocity of movement of the plate when moving forward obliquely downward in rocking motion caused by the rocking device, to such an extent that the downward component of the velocity of movement of the plate temporarily becomes greater than the falling velocity of the object.

(3) A rocking conveyer including a plate for placing an object of transport thereon, a device for rocking the plate, and an eccentric cam connected to the plate and driven to rotate by driving force transmitted thereto through a rotational force transmitting gear or pulley, the eccentric cam having a profile designed so that the distance between the center of rotation of the eccentric cam and the point of contact between the eccentric cam and the gear or pulley reaches a minimum during at least a part of the period that a portion of the eccentric cam, which is connected to the plate, is moving in either or both forward obliquely upward and forward obliquely downward directions, whereby, when the plate moves forward obliquely upward, the object is caused to leave the plate temporarily in the forward obliquely upward direction, or, when the plate moves forward obliquely downward, the downward component of the velocity of the movement of the plate is temporarily made greater than the falling velocity of the object.

(4) A vibrating conveyer including a plate for placing an object of transport thereon, the plate being disposed with a slope, a device for vibrating the plate back and forth with a slope which is more upward than the slope of the plate as viewed forwardly, and an elastic spring engaged with the plate to accelerate the velocity of movement of the plate when moving forwardly in vibration, to such an extent that the object is caused to leave the plate temporarily in a forward direction by inertia induced by the acceleration.

(5) A vibrating conveyer including a plate for placing an object of transport thereon, a device for vibrating the plate forward obliquely upward and backward obliquely downward, and an elastic spring engaged with the plate to accelerate the velocity of movement of the plate when moving backwardly in vibration, to such an extent that the downward component of the velocity of the backward movement of the plate temporarily becomes greater than the falling velocity of the object.

In the accompanying drawings:-

Fig. 1 is a side view for explanation of the operating principle of the arrangements (1) and (3).

Fig. 2 is a side view for explanation of the operating principle of the arrangements (2) and (3).

Fig. 3 is a side view showing the operating principle of the arrangement (4).

Fig. 4 is a side view showing the operating principle of the arrangement (5).

Fig. 5 is a side view showing the arrangement of embodiment 1.

Fig. 6 is a side view showing the arrangement of embodiment 2.

Fig. 7 is a side view showing the arrangement of embodiment 3.

Fig. 8 is a side view showing the arrangement of embodiment 4.

Fig. 9 is a side view showing the arrangement of embodiment 5.

Fig. 10 is a side view showing the arrangement of embodiment 6.

In general, a rocking motion is realized by using an eccentric cam, a crank, etc. However, when a plate having an object of transport placed thereon is simply rocked, the object merely moves together with the plate, and it cannot be moved in a specific direction.

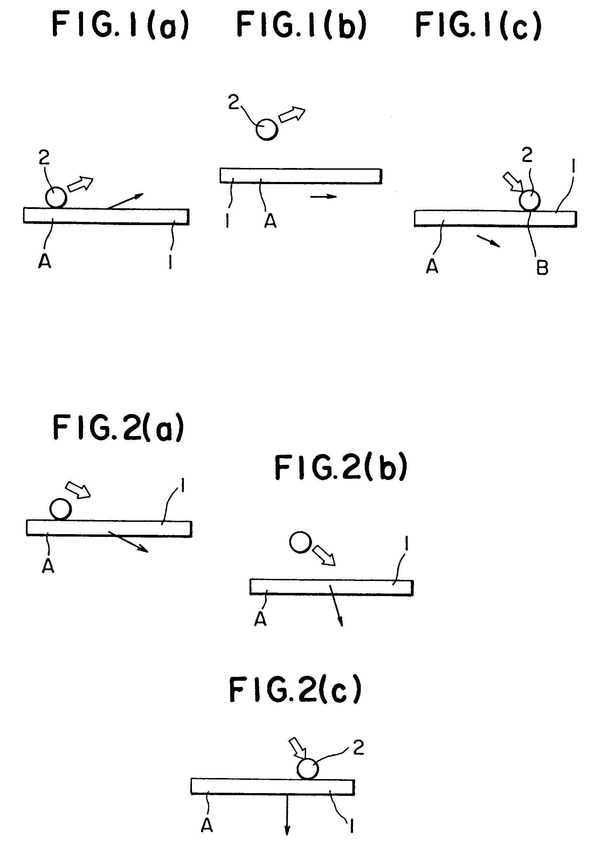

However, if the velocity of the forward obliquely upward movement in rocking motion of the plate is higher than the velocity of the forward obliquely downward movement thereof on the average to such an extent that the object of transport is caused to leave the plate temporarily in the forward obliquely upward direction against gravity by inertia force induced by the forward obliquely upward movement, the object 2 temporarily leaves the plate 1 and then falls thereon, as shown in Figs. 1-(a), 1(b) and 1(c). At this time, since the velocity of the plate 1 has already become lower than the maximum velocity reached at the time of the leaving of the object 2, the falling point B lies forwardly of the previous point A, from which the object 2 has left (it should be noted that it is impossible to determine in which stage the plate 1 lies among various stages, that is, forward obliquely upward movement, really forward movement, forward obliquely downward movement, and backward obliquely downward movement, when the object 2 falls thereon. However, in Fig. 1(c) the plate 1 is shown to be moving forward obliquely downward.).

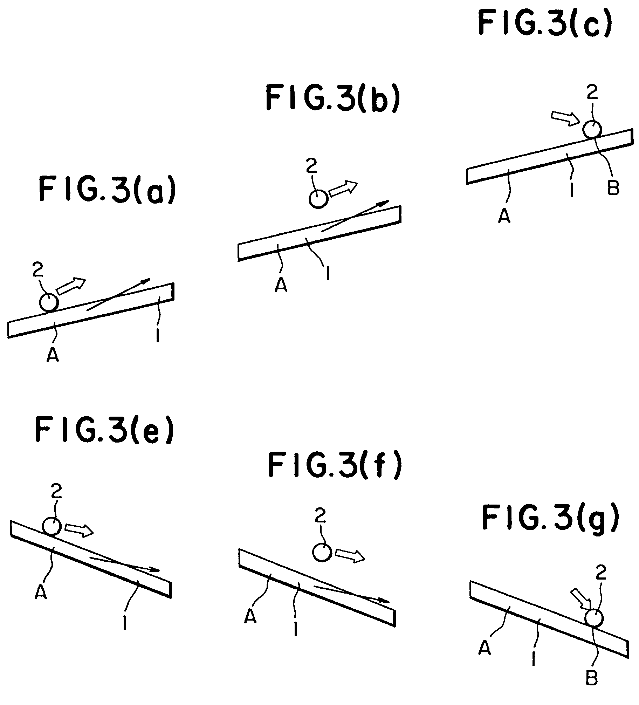

Although in Figs. 1(a), 1(b) and 1(c) the plate 1 is disposed horizontally, it should be noted that the position assumed by the plate 1 is not necessarily limited thereto and that the angle of slope in the longitudinal direction of the plate 1 may be variously set, as will be clear from other figures (e.g., Figs. 3, 5, 9 and 10).

On the other hand, if the velocity of the forward obliquely downward movement of the plate 1 is higher than that of the object 2 and, moreover, the downward component of the velocity of movement of the plate 1 is temporarily higher than the falling velocity of the object 2, the object 2 moves off the plate 1 in a forward obliquely downward direction and then falls on the plate 1, as shown in Figs. 2-(a), 2(b) and 2(c). In this stage, the velocity of the downward movement of the plate 1 has already been overtaken by the falling velocity of the object 2. At this time, however, the forward velocity component of the plate 1 gradually decreases (this will be understood from the directions of velocity of the plate 1 in Figs. 2(a) and 2(b)), whereas, the forward velocity component of the object 2 is substantially the same as that when it has left the plate 1, and the movement of the plate 1 then shifts to the backward obliquely downward movement. Therefore, the object 2 falls on the plate 1 at a point B which is forward of the previous point A, from which it has left (it should be noted that it is impossible to determine in which stage the plate 1 lies among various stages, that is, forward obliquely downward movement, really downward movement, backward obliquely downward movement, and backward obliquely upward movement, when the object 2 falls thereon. However, in Fig. 2-(c) the plate 1 is shown to be moving downwardly.).

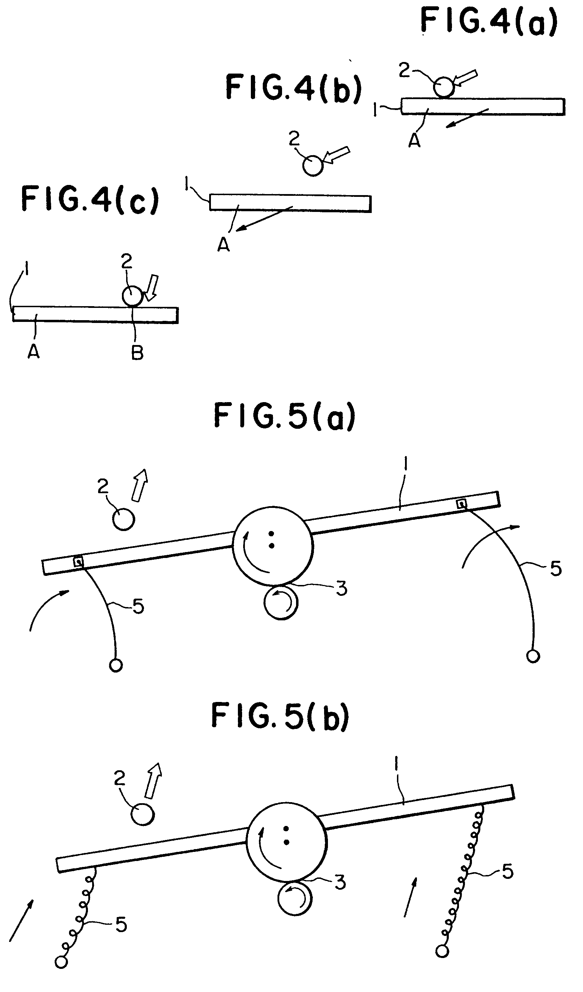

One means for realizing the operating condition as shown in Figs. 1(a), 1(b) and 1(c) is to use a device for rocking the plate 1, and an elastic spring that accelerates the velocity of the forward obliquely upward movement of the plate 1, which is caused by the rocking motion (see the embodiment 1 and Figs. 5(a) and 5(b), described later).

In this case, the relationship between the driving force of the rocking device and the elastic force of the elastic spring must be set such that the former is relatively weak and dependent on the latter. In addition, the object 2 of transport must be given inertia force, which is sufficiently strong for the object 2 to leave the plate 1 temporarily in the forward obliquely upward direction, by the acceleration of the velocity in the forward obliquely upward direction, which is caused by the elastic spring.

In the stage where the movement of the plate 1 has shifted to the forward obliquely downward movement, the velocity in the forward obliquely downward direction must be lower than the velocity in the forward obliquely upward direction on the average. Therefore, the elastic spring is preferably designed to act counter to the forward obliquely downward movement of the plate 1.

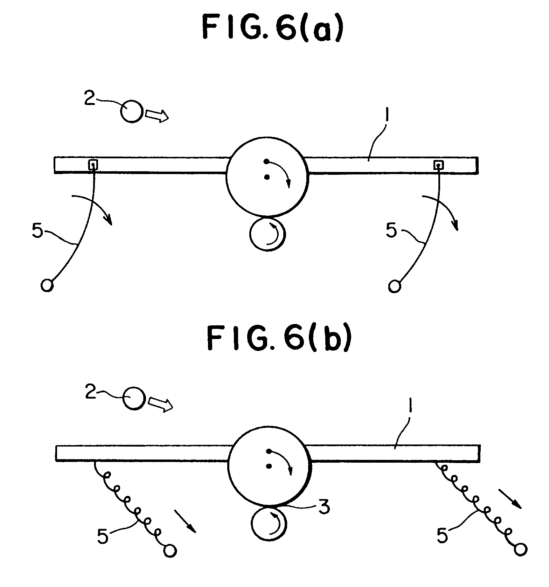

One method for realizing the operating condition as shown in Figs. 2(a), 2(b) and 2(c) is to use a device for rocking the plate 1, and an elastic spring that is engaged with the plate 1 to accelerate the velocity of the forward obliquely downward movement of the plate 1, which is caused by the rocking motion (see the embodiment 2 and Figs. 6-(a) and 6(b), described later).

In this case also, the relationship between the driving force of the rocking device and the elastic force of the elastic spring must be set such that the former is relatively weak and dependent on the latter. In addition, when the object 2 is moving forward obliquely downward, the downward velocity component of the plate 1 must be made temporarily greater than the falling velocity of the object 2 by the acceleration of the velocity in the forward obliquely downward direction, which is caused by the elastic spring, thereby allowing the object 2 to leave the plate 1 temporarily.

If the object 2 should leave the plate 1 in the backward obliquely upward direction due to inertia force induced by the acceleration, which is caused by the elastic force of the elastic spring, in the stage where the movement of the plate 1 has shifted to the backward obliquely upward movement, the function as shown in Figs. 2(a), 2(b) and 2(c) would end in vain.

Therefore, the elastic spring is preferably designed so that the elastic force will act counter to the shift of the movement of the plate 1 to the backward obliquely upward movement at least in the stage where this shift has taken place.

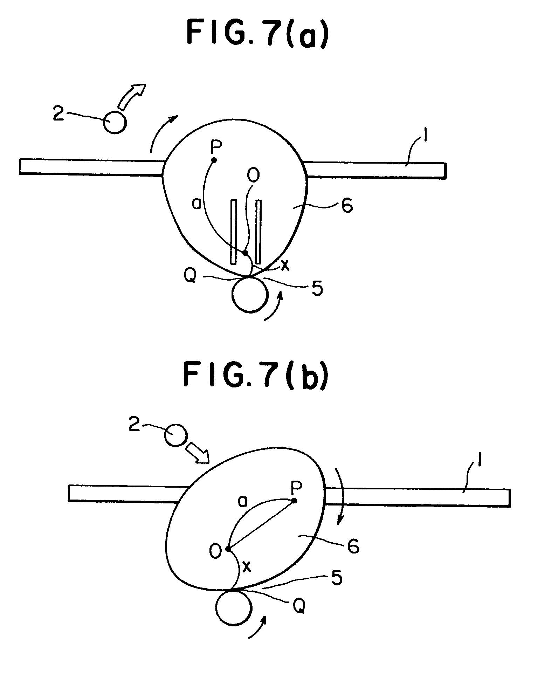

Although the foregoing apparatuses are rocking conveyers that use elastic force from an elastic spring, the operating conditions as shown in Figs. 1(a), 1(b) and 1(c) and Figs. 2(a), 2(b) and 2(c) can also be realized by properly designing the profile of an eccentric cam 6 (see the embodiment 3 and Figs. 7(a) and 7(b), described later).

More specifically, if the profile of an eccentric cam is designed so that the velocity of the plate 1 reaches a maximum when it moves in the forward obliquely upward direction (in the arrangement shown in Figs. 1(a), 1(b) and 1(c)), or when it moves in the forward obliquely downward direction (in the arrangement shown in Figs. 2(a), 2(b) and 2-(c)), the desired change in velocity can be obtained by controlling the speed of rotation transmitted from the driving source. That is, in the former arrangement it is possible to move the object 2 off the plate 1 in the forward obliquely upward direction on the basis of the inertia force caused by the forward obliquely upward movement, and in the latter arrangement, the downward velocity component of the plate 1 can be made greater than the falling velocity of the object 2 during the forward obliquely downward movement.

In this way, the object 2 is moved forwardly on the plate 1 for each rocking motion. Thus, by repeating this operation, the object 2 is transported forwardly step by step.

In general, linear vibration is realized by means of a mechanical piston, electromagnetic force, etc. However, when the plate 1, which has the object 2 placed thereon, is simply vibrated, the object 2 merely moves together with the plate 1, and it cannot be moved in a specific direction.

However, in a case where the plate 1, which has the object 2 placed thereon, is disposed with a slope, and this plate 1 is linearly vibrated back and forth with a slope which is more upward than the slope of the plate 1 as viewed forwardly, if the velocity of the forward movement of the plate 1 in vibration is sufficiently high for the object 2 to leave the plate 1 temporarily in the forward direction against gravity, the object 2 temporarily leaves the plate 1 and then falls thereon at a point B that is forward of the previous point A, as shown in Figs. 3(a), 3(b) and 3(c) or Figs. 3(e), 3(f) and 3(g) (it should be noted that Figs. 3(a), 3(b) and 3(c) show an arrangement in which the plate 1 is sloped forward obliquely upward and vibrating with a slope which is more upward than the slope of the plate 1 as viewed forwardly, whereas Figs. 3(e), 3(f) and 3-(g) show an arrangement in which the plate 1 is sloped forward obliquely downward and vibrating with a slope which is a little closer to the horizontal than the slope of the plate 1 as viewed forwardly).

This will be clear from the fact that when the object 2 leaves the plate 1, the plate 1 reaches a maximum velocity during the forward stroke of the vibration, and thereafter, the plate 1 is moving forwardly at lower velocity, or it has already shifted to the backward movement, whereas the object 2 falls on the plate 1 while moving forwardly at the maximum velocity (it should be noted that Figs. 3-(c) and 3(g) show a case where the plate 1 is at rest in the stage where the object 2 has fallen thereon).

On the other hand, when the plate 1, which has the object 2 placed thereon, is vibrated forward obliquely upward and backward obliquely downward, if the downward velocity component of the backward obliquely downward movement of the plate 1 is greater than the falling velocity of the object 2, the point B on the plate 1 where the object 2 falls is forward of the previous point A, as shown in Figs. 4(a), 4(b) and 4(c).

This will be clear from the fact that when the object 2 leaves the plate 1, not only the downward velocity component of the plate 1 but also the backward velocity component reaches a maximum or is close to it because the angle of vibration of the plate 1 is fixed, whereas the object 2 moves backwardly merely on the basis of the velocity with which it leaves the plate 1, and therefore, when the object 2 falls, the plate 1 inevitably lies further backwardly relative to the object 2.

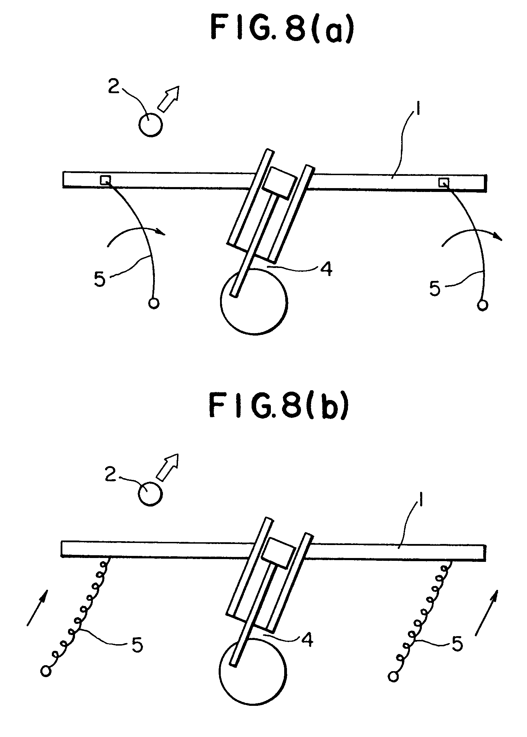

The operating condition that is shown in Figs. 3(a), 3(b) and 3(c) or Figs. 3(e), 3(f) and 3(g) can be realized by engaging the plate 1 with an elastic spring which accelerates the movement of the plate 1 during the forward stroke of vibration (see the embodiment 4 and Fig. 8, described later).

In this case, the relationship between the driving force of the vibrating device and the elastic force of the elastic spring must be set such that the former is relatively weak and dependent on the latter. In addition, the object 2 must be given inertia force, which is sufficiently strong for the object 2 to leave the plate 1 temporarily, by the acceleration of the velocity in the forward direction, which is caused by the elastic spring.

If in the above-described arrangement the acceleration of the velocity, which is caused by the elastic spring, should act also in the backward direction, causing the object 2 to leave the plate 1 again backwardly, the function as shown in Figs. 3-(a), 3(b) and 3(c) or Figs. 3(e), 3(f) and 3(g) would end in vain.

However, when the velocity is accelerated forwardly by the elastic force of the elastic spring 5, the spring 5 usually acts counter to the backward movement. Therefore, there is normally no possibility that the object 2 will be caused to leave both forwardly and backwardly by the acceleration of the velocity caused by the elastic force of the elastic spring 5.

The operating condition as shown in Figs. 4(a), 4(b) and 4(c) can be realized by engaging the plate 2 with an elastic spring which accelerates the velocity of the movement of the plate 1 during the backward stroke of vibration so that the downward velocity component of the plate 1 is greater than the falling velocity of the object 2.

Theoretically, however, the falling point of the object 2 can be backward of the previous point thereof if, when the object 2 falls, the plate 1 has once returned to the backward obliquely downward position and already shifted to the forward obliquely upward movement.

However, to allow such a situation to occur, the plate 1 must be moved forwardly at considerably high velocity while the object 2 is off the plate 1. In addition, when the elastic spring 5 accelerates the velocity in the backward direction, it usually acts counter to the forward movement. Therefore, the above-described situation cannot occur in the normal state.

In this way, the object 2 is moved forwardly on the plate 1 for each cycle of the vibration. Thus, by repeating this operation, the object 2 is transported forwardly step by step.

Embodiment 1:

Figs. 5(a) and 5(b) show an embodiment corresponding to the above-described arrangement (1).

Referring to Fig. 5(a), leaf springs 5 are provided below a plate 1, and engaged therewith in such a state that portions of the leaf spring 5 which are connected to the plate 1 are movable, so that when the plate 1 moves forward obliquely upward, the leaf springs 5 accelerate the velocity of the forward obliquely upward movement of the plate 1 by flexural elastic force, thereby causing the object 2 of transport to leave the plate 1 temporarily in the forward obliquely upward direction against gravity by inertia force induced by the acceleration.

In the arrangement shown in Fig. 5(b), compression springs 5 are provided below the plate 1 and engaged therewith so that when the plate 1 moves forward obliquely upward, the compression springs 5 accelerate the velocity of the forward obliquely upward movement of the plate 1 on the basis of the compressive elastic force, thereby causing the object 2 to leave the plate 1 temporarily in the forward obliquely upward direction against gravity by inertia force induced by the acceleration.

In the arrangement shown in Fig. 5(a), if the system is designed so that the position where the flexural elastic force at a portion of each leaf spring 5, which is engaged with the plate 1, becomes 0 is coincident with the longitudinally central position in rocking motion of the portion concerned, the leaf springs 5 begin to accelerate the velocity of movement of the plate 1 when it reaches the backward extremity of the rocking motion, and the leaf springs 5 then accelerate the plate 1 continuously as the plate 1 moves forward obliquely upward, thereby causing the object 2 to leave the plate 1 in the forward obliquely upward direction before the forward obliquely upward movement of the plate 1 shifts to the really forward movement.

On the other hand, when the plate 1 moves forward obliquely downward, the leaf springs 5 act counter to the movement of the plate 1. Accordingly, the object 2 falls on the plate 1 at a point which is forward of the previous point, from which it has left.

It should be noted that the position where the flexural elastic force of the portion of each leaf spring 5, which is engaged with the plate 1, becomes 0 is not necessarily limited to the longitudinally central position in the rocking motion. The position concerned may be backward or forward of the central position as long as the function as shown in Figs. 1(a), 1(b) and 1(c) can be realized.

In the arrangement shown in Fig. 5(b), if the system is designed so that the position where the compressive elastic force at a portion of each compression spring 5, which is engaged with the plate 1, becomes 0 is coincident with the uppermost position in rocking motion of the portion concerned, the compression springs 5 begin to accelerate the velocity of movement of the plate 1 when it reaches the lowermost position, and the compression springs 5 then accelerate the plate 1 continuously as the plate 1 moves backward obliquely upward, upwardly and then forward obliquely upward, thereby causing the object 2 to leave the plate 1 in the forward obliquely upward direction before the forward obliquely upward movement of the plate 1 shifts to the really forward movement.

On the other hand, when the plate 1 moves forward obliquely downward, downwardly and then backward obliquely downward, the compression springs 5 act counter to the movement of the plate 1. Thus, since the average velocity in the forward obliquely downward direction of the plate 1 is lower than the average velocity in the forward obliquely upward, the object 2 is allowed to fall on the plate 1 at a point which is forward of the previous point, from which it has left.

It should be noted that the position where the compressive elastic force at the portion of each compression spring 5, which is connected to the plate 1, becomes 0 is not necessarily limited to the position described above. The position concerned may be higher or lower than the above-described position as long as the function as shown in Fig. 1-(a), 1(b) and 1(c) can be realized (however, the position concerned must be higher than the vertically central position in the rocking motion of the portion connected to the plate 1).

In addition, although the embodiment 1 (and the embodiment 2, described later) uses an eccentric gear or an eccentric pulley as a rocking device 3, it is a matter of course that the rocking device is not necessarily limited to them.

Although in the arrangement shown in Fig. 5(b) the compression springs 5 are provided below the plate 1, tension springs may be provided above the plate 1 in place of the compression springs 5, as a matter of course.

Embodiment 2:

Figs. 6(a) and 6(b) show an embodiment corresponding to the arrangement (2).

In the arrangements shown in Figs. 6(a) and 6-(b), leaf springs 5 and tension springs 5 are respectively provided below the plate 1 and engaged therewith so that when the plate 1 moves forward obliquely downward, the downward velocity component of the plate 1 temporarily becomes greater than the falling velocity of the object 2 of transport on the basis of the flexural elastic force (in the case of Fig. 6(a)) or the tensile elastic force (in the case of Fig. 6(b)), thereby allowing the plate 1 to leave the object 2 temporarily.

In the arrangement shown in Fig. 6(a), if the position where the flexural elastic force at a portion of each leaf spring 5, which is connected to the plate 1, becomes 0 is made coincident with the forward extremity of rocking motion of the portion concerned, the leaf springs 5 accelerate the plate 1 when moving forward obliquely upward, forwardly and then forward obliquely downward. On the other hand, when the plate 1 moves backward obliquely downward, backwardly and then backward obliquely upward, the leaf springs 5 act counter to the movement of the plate 1. Accordingly, the object 2 is allowed to fall on the plate 1 at a point which is forward of the previous point, from which it has left.

It should be noted that the position where the flexural elastic force at the portion of each leaf spring 5, which is connected to the plate 1, becomes 0 is not necessarily limited to the position described above. The position concerned may be backward or forward of the above-described position as long as the function as shown in Figs. 2(a), 2(b) and 2(c) can be realized.

In the arrangement shown in Fig. 6(b), if the position where the tensile elastic force at a portion of each tension spring 5, which is connected to the plate 1, becomes 0 is made coincident with the lowermost position in rocking motion of the portion concerned, the tension springs 5 accelerate the plate 1 when moving forward obliquely downward, downwardly and then backward obliquely downward. On the other hand, when the plate 1 moves from the lowermost position backward obliquely upward, really upwardly and then forward obliquely upward, the tension springs 5 act counter to the movement of the plate 1. Therefore, there is no possibility that the object 2 will leave the plate 1 in the backward obliquely upward direction due to the acceleration caused by the elastic force of the tension springs 5 when the plate 1 moves backward obliquely upward. Thus, the function as shown in Figs. 2(a), 2(b) and 2(c) can be realized.

It should be noted that the position where the tensile elastic force at the portion of each tension spring 5, which is connected to the plate 1, becomes 0 is not necessarily limited to the position described above. The position concerned may be lower or higher than the above-described position as long as the function as shown in Figs. 2(a), 2(b) and 2(c) can be realized (however, the position concerned must be lower than the vertically central position in rocking motion of the plate 1).

Although in the embodiment 2 the tension springs 5 are provided below the plate 1, compression springs may be provided above the plate 1 in place of the tension springs 5, as a matter of course.

Embodiment 3:

Figs. 7(a) and 7(b) show an embodiment corresponding to the arrangement (3).

The plate 1 is connected to an eccentric cam 6. In this case, the rotational speed of the plate 1 may be approximately expressed by

$av/x$

where a is the distance OP between the center O of rotation of the eccentric cam 6 and the position P at which the eccentric cam 6 is connected to the plate 1, and x is the distance OQ between the center O of rotation and the position Q at which the eccentric cam 6 is in contact with a rotating gear or pulley 7, serving as a driving source.

In this arrangement, if the profile of the eccentric cam 6 is designed so that x takes a minimum value throughout or during a part of the period that the plate 1 is moving either forward obliquely upward or forward obliquely downward, as shown in Figs. 7(a) and 7(b), the velocity of movement of the plate 1 can reach a maximum during a part of or throughout the period that it is moving forward obliquely upward or forward obliquely downward.

The above-described function can be realized by setting the speed of the driving gear or pulley 7 at such a level that the object 2 leaves the plate 1 when moving forward obliquely upward, or controlling the speed of the driving gear or pulley 7 so that when the plate 1 moves forward obliquely downward, the downward velocity component of the plate 1 becomes greater than the falling velocity of the object 2.

Embodiment 4:

Figs. 8(a) and 8(b) show an embodiment corresponding to the arrangement (4).

In the arrangements shown in Figs. 8(a) and 8-(b), leaf springs 5 and compression springs 6 are respectively provided below the plate 1 and connected thereto so that when the plate 1 moves forwardly in vibration on the basis of the flexural elastic force (in the case of Fig. 8(a)) or the compressive elastic force (in the case of Fig. 8(b)), the object 2 of transport is caused to leave the plate 1 by inertia force induced by the acceleration.

In Figs. 8(a) and 8(b), if the position where the flexural or compressive elastic force at a portion of each leaf or compression spring 5, which is engaged with the plate 1, becomes 0 is made coincident with the uppermost position in vibration of the portion concerned, when the plate 1 moves forwardly, the velocity thereof is accelerated by the leaf or compression springs 5, whereas, when the plate 1 moves backwardly, the leaf or compression springs 5 act counter to the movement of the plate 1. Therefore, the object 2 is prevented from leaving the plate 1 when the latter moves backwardly. Thus, the function as shown in Figs. 3(a), 3(b) and 3(c) or Figs. 3(e), 3(f) and 3(g) can be realized.

It should be noted that the position where the flexural or compressive elastic force at the portion of each leaf or compression spring 5, which is engaged with the plate 1, becomes 0 is not necessarily limited to the position described above. The position concerned may be lower or higher than the above-described position as long as the function as shown in Figs. 3(a), 3(b) and 3(c) or Figs. 3(e), 3(f) and 3(g) can be realized (however, the position concerned must be higher than the central position in vibration of that portion which is connected to the plate 1).

Although in the embodiment 4 (and the embodiment 5, described later) a piston is used as a vibrating device 4, the vibrating device is, needless to say, not necessarily limited thereto.

Although in Fig. 8(b) the compression springs 5 are provided below the plate 1, tension springs may be provided above the plate 1 in place of the compression springs 5, as a matter of course.

Embodiment 5:

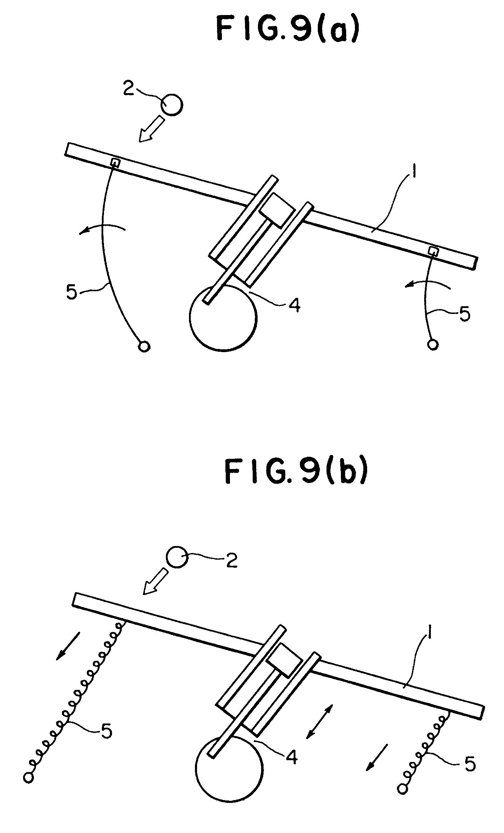

Figs. 9(a) and 9(b) show an embodiment corresponding to the arrangement (5).

In the arrangements shown in Figs. 9(a) and 9-(b), leaf springs 5 and tension springs 5 are respectively provided below the plate 1 and connected thereto so that when the plate 1 moves backward obliquely downward in vibration, the downward component of the velocity of the plate 1 temporarily becomes greater than the falling velocity of the object 2 of transport on the basis of the flexural elastic force (in the case of Fig. 9(a)) or the tensile elastic force (in the case of Fig. 9(b)), thereby allowing the plate 1 to leave the object 2 temporarily.

In Figs. 9(a) and 9(b), if the position where the flexural or tensile elastic force of a portion of each leaf or tension spring 5, which is engaged with the plate 1, becomes 0 is made coincident with the lowermost position in vibration of the portion concerned, when the plate 1 moves backward obliquely downward in vibration, the velocity of the plate 1 is accelerated by the springs 5, whereas, when it moves forward obliquely upward in vibration, the springs 5 act counter to the movement of the plate 1. Therefore, the object 2 will not leave the plate 1 during the forward obliquely upward movement. Thus, the function as shown in Figs. 4-(a), 4(b) and 4(c) can be realized.

The position where the flexural or tensile elastic force at the portion of each spring 5, which is engaged with the plate 1, becomes 0 is not necessarily limited to the position described above. The position concerned may be lower or higher than the above-described position as long as the function as shown in Figs. 4(a), 4(b) and 4(c) can be realized (however, the position concerned must be lower than the central position in vibration of the portion of the spring 5, which is engaged with the plate 1).

Although in the embodiment 5 the tension springs 5 are provided below the plate 1, compression springs 5 may be provided above the plate 1 in place of the tension springs 5, as a matter of course.

Embodiment 6:

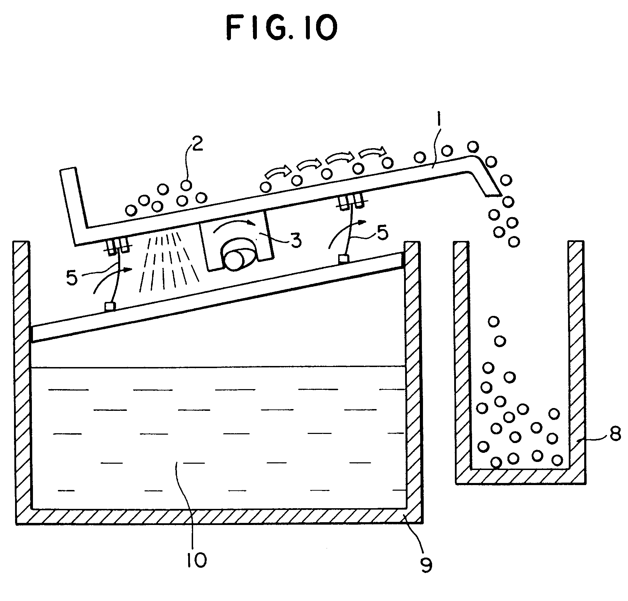

Fig. 10 shows an embodiment in which as the plate 1 a chip pan 1 is used, which filters a cutting fluid 10 and collects coarse cutting chips 2, at the inlet of a cutting fluid tank 9 when cutting chips 2, which are generated during the use of a machine tool, are circulated together with the cutting fluid 10.

The embodiment 6 employs an arrangement in which the chip pan 1 performs a rocking motion by the action of an eccentric shaft 3, and when the chip pan 1 moves forward obliquely upward, the movement thereof is accelerated by leaf springs 5 that provided below the chip pan 1 in the same way as in the embodiment 1.

Thus, for each rocking motion of the chip pan 1, the cutting chips 2, which are the object of transport, move forwardly on the chip pan 1 step by step, and eventually fall into a chip basket 8 that is disposed under the forward end portion of the chip pan 1.

In the embodiment 6, it is possible to employ the arrangement (1) that uses elastic springs other than leaf springs, as a matter of course. It is also possible to select one from among the arrangements (2) to (5).

According to the present invention, arranged as described above, the object of transport moves forwardly step by step for each rocking or vibrating motion of the plate, and the movement caused by the rocking or vibrating motion allows the object to move while shaking off the accompanying liquid or powder therefrom.

In particular, when the present invention is used for the movement of cutting chips on a chip pan as in the embodiment 6, the cutting fluid is shaken off the cutting chips by the vibrating or rocking motion and allowed to fall into the cutting fluid tank through holes that are provided in the bottom of the chip pan, serving as the plate in the present invention. Thus, the consumption of cutting fluid can be reduced in comparison to transport that is carried out by using the conventional belt conveyer.

In addition, the vibrating or rocking motion makes it possible to prevent fine cutting chips from blocking the holes provided in the bottom of the chip pan, which has heretofore been experienced with the conventional stationary chip pan. Accordingly, the cutting fluid can enter the cutting fluid tank smoothly without being obstructed.

Thus, the conveyer according to the present invention, which is different from the conventional belt conveyers in the principle of movement, provides various advantages as described above, and is therefore extremely valuable.

**Claims**

1. A rocking conveyer comprising:
   a plate for placing an object of transport thereon;
   a device for rocking said plate back and forth circularly within a vertical plane; and
   an elastic spring engaged with said plate to accelerate a velocity of movement of said plate when moving forward obliquely upward in rocking motion caused by said rocking device, to such an extent that said object is caused to leave said plate temporarily in a forward obliquely upward direction by inertia force induced by said acceleration.

2. A rocking conveyer according to Claim 1, wherein said elastic spring is a leaf spring, and wherein a position where flexural elastic force at a portion of said leaf spring, which is engaged with said plate, becomes 0 is coincident with a longitudinally central position in rocking motion of said portion.

3. A rocking conveyer according to Claim 1, wherein said elastic spring is a compression spring, and wherein a position where compressive elastic force at a portion of said compression spring, which is engaged with said plate, becomes 0 is coincident with an uppermost position in rocking motion of said portion.

4. A rocking conveyer according to Claim 1, wherein said plate is a chip pan having a large number of holes in a bottom thereof to filter a cutting fluid, and said object of transport is cutting chips.

5. A rocking conveyer comprising:
   a plate for placing an object of transport thereon;
   a device for rocking said plate back and forth circularly within a vertical plane; and
   an elastic spring engaged with said plate to accelerate a velocity of movement of said plate when moving forward obliquely downward in rocking motion caused by said rocking device, to such an extent that a downward component of the velocity of movement of said plate temporarily becomes greater than a falling velocity of said object.

6. A rocking conveyer according to Claim 5, wherein said elastic spring is a leaf spring, and wherein a position where flexural elastic force at a portion of said leaf spring, which is engaged with said plate, becomes 0 is coincident with a foremost position in rocking motion of said portion.

7. A rocking conveyer according to Claim 5, wherein said elastic spring is a tension spring, and wherein a position where tensile elastic force at a portion of said tension spring, which is engaged with said plate, becomes 0 is coincident with a lowermost position in rocking motion of said portion.

8. A rocking conveyer according to Claim 5, wherein said plate is a chip pan having a large number of holes in a bottom thereof to filter a cutting fluid, and said object of transport is cutting chips.

9. A rocking conveyer comprising:
    a plate for placing an object of transport thereon;
    a device for rocking said plate; and
    an eccentric cam connected to said plate and driven to rotate by driving force transmitted thereto through a rotational force transmitting gear or pulley, said eccentric cam having a profile designed so that a distance between a center of rotation of said eccentric cam and a point of contact between said eccentric cam and said gear or pulley reaches a minimum during at least a part of the period that a portion of said eccentric cam, which is connected to said plate, is moving in either or both forward obliquely upward and forward obliquely downward directions, whereby, when said plate moves forward obliquely upward, said object is caused to leave said plate temporarily in a forward obliquely upward direction, or, when said plate moves forward obliquely downward, a downward component of velocity of the movement of said plate is temporarily made greater than a falling velocity of said object.

10. A rocking conveyer according to Claim 9, wherein said plate is a chip pan having a large number of holes in a bottom thereof to filter a cutting fluid, and said object of transport is cutting chips.

11. A vibrating conveyer comprising:
    a plate for placing an object of transport thereon, said plate being disposed with a slope;
    a device for vibrating said plate back and forth with a slope which is more upward than the slope of said plate as viewed forwardly; and
    an elastic spring engaged with said plate to accelerate a velocity of movement of said plate when moving forwardly in vibration, to such an extent that said object is caused to leave said plate temporarily in a forward direction by inertia induced by said acceleration.

12. A vibrating conveyer according to Claim 11, wherein said elastic spring is a leaf spring, and wherein a position where flexural elastic force at a portion of said leaf spring, which is engaged with said plate, becomes 0 is coincident with an uppermost position in vibration of said portion.

13. A vibrating conveyer according to Claim 11, wherein said elastic spring is a compression spring, and wherein a position where compressive elastic force at a portion of said compression spring, which is engaged with said plate, becomes 0 is coincident with an uppermost position in vibration of said portion.

14. A vibrating conveyer according to Claim 11, wherein said plate is a chip pan having a large number of holes in a bottom thereof to filter a cutting fluid, and said object of transport is cutting chips.

15. A vibrating conveyer comprising:
    a plate for placing an object of transport thereon;
    a device for vibrating said plate forward obliquely upward and backward obliquely downward; and
    an elastic spring engaged with said plate to accelerate a velocity of movement of said plate when moving backwardly in vibration, to such an extent that a downward component of the velocity of the backward movement of said plate temporarily becomes greater than a falling velocity of said object.

16. A vibrating conveyer according to Claim 15, wherein said elastic spring is a leaf spring, and wherein a position where flexural elastic force at a portion of said leaf spring, which is engaged with said plate, becomes 0 is coincident with a lowermost position in vibration of said portion.

17. A vibrating conveyer according to Claim 15, wherein said elastic spring is a tension spring, and wherein a position where tensile elastic force at a portion of said tension spring, which is engaged with said plate, becomes 0 is coincident with a lowermost position in vibration of said portion.

18. A vibrating conveyer according to Claim 15, wherein said plate is a chip pan having a large number of holes in a bottom thereof to filter a cutting fluid, and said object of transport is cutting chips.

# FIG.1(a)　FIG.1(b)　FIG.1(c)

# FIG.2(a)

# FIG.2(b)

# FIG.2(c)

FIG.3(c)

FIG.3(b)

FIG.3(a)

FIG.3(e)

FIG.3(f)

FIG.3(g)

FIG.4(a)

FIG.4(b)

FIG.4(c)

FIG.5(a)

FIG.5(b)

# F I G. 6(a)

# F I G. 6(b)

# FIG. 7(a)

# FIG. 7(b)

# F I G. 8(a)

# F I G. 8(b)

# FIG.9(a)

# FIG.9(b)

# FIG. 10

**European Patent Office**

**EUROPEAN SEARCH REPORT**

Application Number

# DOCUMENTS CONSIDERED TO BE RELEVANT

EP 93300060.6

| Category | Citation of document with indication, where appropriate, of relevant passages | Relevant to claim | CLASSIFICATION OF THE APPLICATION (Int. Cl.5) |
|---|---|---|---|
| X | AU - B - 31 476/77 (W.D. & H.O. WILLS) * Fig. 1; page 3, lines 9-19 * | 1,2 | B 65 G 27/08 B 65 G 27/18 B 07 B 1/36 B 07 B 1/42 |
| X | DE - A - 3 027 975 (AKTIEBOLAGET ARBOGA MEKA- NISKA VERSTAD) * Page 16 * | 1,2 | |
| X | US - A - 4 062 768 (ELLIOT) * Fig. 1; abstract * | 1,2,4 | |
| X | GB - A - 1 602 866 (FMC CORPORATION) * Fig. 1 * | 1,2 | |
| X | FR - A - 2 367 542 (BRIGOLLE) * Fig. 3,7; page 1, lines 38,39; page 4, lines 11,17 * | 1,3,9 | TECHNICAL FIELDS SEARCHED (Int. Cl.5) |
| Y | | 10 | B 03 B |
| Y | DE - A - 3 823 896 (HEIN) * Fig. 1 * | 10 | B 07 B B 65 G |
| X | US - A - 4 754 870 (HALLMAN) * Fig. 1 * | 1,3, 11,13 | |
| Y | | 14 | |
| Y | EP - A - 0 155 180 (MASON & NORTH ENGINEERING LIMITED) * Abstract * | 14 | |
| X | US - A - 3 481 451 (WICKAM) | 1,3 | |

The present search report has been drawn up for all claims

| Place of search | Date of completion of the search | Examiner |
|---|---|---|
| VIENNA | 17-12-1993 | BAUMGARTNER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)

European Patent
Office

**EUROPEAN SEARCH REPORT**

Application Number

-2-
EP 93300060.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| | * Fig. 1 * | | |
| X | GB - A - 1 143 975 (FRIEDRICH UHDE GMBH) * Fig. 1; page 1, line 10; page 2, line 73 * | 1,4 | |
| A | DE - B - 2 448 513 (J.M. VOITH GMBH) * Fig. 1 * | 4 | |
| A | US - A - 2 037 407 (CREMER) * Fig. 5 * | 9 | |
| A | DE - C - 329 411 (INGENIEURBÜRO HERMANN MARCUS) * Fig. 1,3 * | 9 | |

TECHNICAL FIELDS
SEARCHED (Int. Cl.5)

The present search report has been drawn up for all claims

| Place of search | Date of completion of the search | Examiner |
|---|---|---|
| VIENNA | 17-12-1993 | BAUMGARTNER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)